# EUROPEAN PATENT APPLICATION

(11) **EP 3 402 025 A1**
(43) Date of publication of application: **14.11.2018**
(21) Application number: 17170731.8
(22) Date of filing: 11.05.2017
(51) Int. Cl.: H02G 3/04

(54) **ASSEMBLY OF CABLE CHANNEL MODULES**

(71) Applicant: HellermannTyton GmbH, 25436 Tornesch (DE)
(72) Inventor: RUEBEL, Roman, 22303 Hamburg (DE); MASCHMANN, Sven, 22589 Hamburg (DE)
(74) Representative: Robert, Vincent

(57) **Abstract**

A cable channel module (10) for receiving a cable harness comprises a first connector (14) and a second connector (16) oppositely disposed from one another; and a cable supporting section (12) that has a base and is open at one side for receiving said cable harness in a direction transverse to the first and second connectors; wherein the first and second connectors are oppositely disposed from one another at two sides of the base (18). The first and second connectors are respective first and second components of an articulated ball link that is configured moveable about at least two axes of rotation. The invention further relates to a modular assembly of cable channel modules, to a mounting device and to a method of assembling a modular assembly of cable channel modules by filling curable material into the passage (26).

## Description

The present invention relates to a cable channel module for receiving at least a portion of a cable harness, the cable channel module comprising a first connector and a second connector oppositely disposed from one another; and a cable supporting section that has a base and is open at one side for receiving said portion of the cable harness in a direction transverse to the first and second connectors; wherein the first and second connectors are oppositely disposed from one another at two sides of the base; and wherein the first and second connectors are respective first and second components of an articulated link that is configured moveable about at least two axes of rotation. The invention further relates to a modular assembly of cable channel modules, to a mounting device and to a method of assembling a modular assembly of cable channel modules.

In vehicles, such as automobiles cable harnesses are designed according to geometric and electrical requirements. This means that cables are e.g. provided connecting the front and rear lights of the vehicle to the lighting system, arranged e.g. at a side of the vehicle, further cables are provided to e.g. connect the electrical systems of the vehicles cockpit to a control system etc. The various cables are guided throughout the vehicle in a so-called cable harness.

In order to protect the cable harness from damage and to secure this within the vehicle it is known to provide individual plastic cable channels. These individual plastic cable channels differ in shape, size and extent for every car and environment. For this reason a vehicle specific plastic cable channel has to be made available for almost every vehicle available on the market. Consequently the individual plastic cable channels cannot be used as carry-over-parts for different vehicles.

In order to produce individual cable channels an individual product engineering process is carried out. This comprises the manufacture of vehicle specific injection molds and tools for such plastic cable channels. This is very time consuming process and can take up to 24 months to obtain the individual plastic cable channels. This product engineering process is also associated with a high demand in effort and cost and it makes it very cost ineffective to supply customers with small batches on a small-scale production of specialist vehicles.

For this reason it is an object of the present invention to provide a low cost design that can be used to form individual cable channels that can adopt various shapes. It is a further object of the invention to make available the individual cable channels in a time efficient manner.

This object is satisfied in accordance with the subject matter of claim 1.

Such a cable channel module is configured for receiving at least a portion of a cable harness and comprises a first connector and a second connector oppositely disposed from one another; and a cable supporting section that has a base and is open at one side for receiving said portion of the cable harness in a direction transverse to the first and second connectors; wherein the first and second connectors are oppositely disposed from one another at two sides of the base; and wherein the first and second connectors are respective first and second components of an articulated link that is configured moveable about at least two axes of rotation.

In this way modular individual cable channels can be made available. A modular concept in which individual modules can be connected to one another by way of an articulated link enables a tailoring of a modular assembly of cable channel modules to the geometric and electrical requirements of the individual vehicle in which the cable channel is to be installed, i.e. various routings of the cable channel modules are made available by this alternative solution for the cable guiding.

The design time of individual cable channels is significantly reduced as such modules can be universally used and the routing thereof can be adapted to different environments in a very simple manner, e.g. by placing these in a vehicle by trial and error.

The demand in effort and cost in developing an individual cable channel is likewise significantly reduced. This is because no CAD-design is needed to establish an individual cable channel and therefor no corresponding mold and tool designs are required.

The one-of expenditure for the design of the individual channel, the corresponding molds and tools is significantly reduced as the modules can be used in a variety of vehicles. This makes individual cable channels feasible also in small scale productions.

Moreover, only one shape of injection tool is required to form a plurality of modules that can be connected to one another to form a variety of individual cable channels that can be used in a plethora of vehicles. Moreover, in the event that a part of a cable channel requires repair or maintenance this can simply be replaced without having to replace the complete channel.

It should also be noted that the individual modules can be packaged more dense, reducing the required packaging size and consequent cost of delivery to a customer.

An introduction of the cable harness into the cable channel module can be facilitated by providing access to the cable supporting section in a direction transverse to the first and second connectors.

Preferably the articulated link is a ball link and the first connector is a ball and the second connector is a socket. In this way a male and female connector is provided at the module facilitating the ease and speed in which a plurality of modules can be connected to one another. Moreover, a ball link enables a movement in at least two-degrees of freedom, i.e. a two-axis routing.

Advantageously the cable channel modules further comprise a passage extending between the two sides of the base. Such a passage can be used to fixedly connect individual modules to one another.

Preferably the passage extends through the base and connects the first connector to the second connector. It is preferred it the passage connects an opening of the first connector to an opening of the second connector. In this way e.g. curable material, such as a two-component adhesive, can be introduced into the respective passage and used to stiffen the connection between adjacent cable channel modules.

For this reason it is preferred if the passage is configured as a drain for a curable material, such as e.g. a two-component adhesive. This means that the modular concept is stiffened on the application of glue. Access to the drain is made available at the position of the respective component of the ball joint.

Advantageously, the opening of the first connector and the opening of the second connector have a shape whose outer periphery differs from a regular or uniform circle. The irregular shape of the opening increases the surface area of the opening, such that the fixed connection, e.g. by means of a two-component adhesive, between connected first and second connectors can be improved due to the presence of increased amounts of adhesive. It is preferred when the shape of the periphery of the opening of the first connector is not complementary to a shape of the opening of the second connector.

Advantageously the base comprises an elevated portion in the region of the passage. This elevated portion provides a reinforcement of the cable supporting section in the region of the passage.

It is preferred if the cable supporting section has two side members projecting from the base at two further sides of the base, with the two side members forming the open side, and with the cable supporting section in particular being at least generally U-shaped, C-shaped or V-shaped. By forming the cable supporting section e.g. essentially U-shaped parts of the cable harness can be held therein such that they are protected from the environment.

Preferably the cable channel module further comprises at least one interface, with the at least one interface being provided at at least one of the base and the side members of the cable supporting section. Making available at least one interface at each module enables the fixation of the segment of the chain of modules to the surrounding environment. Moreover, such interfaces can also be used to fix the position of part of a cable harness within the module.

In this way the at least one interface is, for example, an interface for fixing elements, an interface to a mount point within e.g. a vehicle and/or an interface, e.g. an eyelet, for a fastener element, such as a cable tie, used to connect part of the cable harness to the cable channel module. By using fixing elements that are formed from existing HT-products, e.g. for fixation, can improve the number of sales achievable by this product.

Preferably the cable channel module further comprises a cover that can be removably connected to the two side members of the cable supporting section. The cover, on the one hand, can be used to fix a position of part of the cable harness within the cable channel module. On the other hand, the cover can be used to protect the cable harness.
According to a further aspect the above mentioned object is satisfied by a modular assembly of cable channel modules, comprising at least first and second cable channel modules, wherein the first and second cable channel modules are configured in accordance with the teaching presented herein, wherein the first connector of the first cable channel module is inserted into the second connector of the second cable channel module to form at least a part of a flexible chain of cable channel modules.

The advantages described and discussed in the foregoing with reference to individual cable channel modules likewise holds true for the modular assembly of cable channel modules.

Preferably the first connector inserted into the second connector of at least the first and second cable channel modules is fixedly connected to the second connector by means of a curable material, wherein preferably the curable material is introduced into the respective passages of the flexible chain of cable channel modules in order to non-releasably connect the first and second connectors of each of the connected first and second connectors.

Such a modular adhesive-concept enables the delivery of individual modules that can be formed to the final parts in a very short period of time (between 1 and 7 days). Moreover, the assembly of the individual modules to a flexible chain of modules can also be carried out in a very short period of time, namely in a few minutes, e.g. 1 to 6 minutes.

In contrast to flexible concepts, a rigid modular assembly can not only be configured to conform to the space that is available for the installation of the modular assembly, but it is also accurately fixed in position and can be used in a reproducible manner. The adhesive drain formed at the respective openings of the respective connectors enables a quick assembly with low manual effort and a high process reliability during the filling process. For example, in order to judge whether the introduction of curable material was successful one only has to monitor whether curable material is present at the final opening, i.e. the last module of the flexible chain of modules that is most remote from the point of injection of curable material.

In a further aspect the present invention relates to a mounting device for a modular assembly of cable channel modules, the mounting device comprising:
a plurality of mount points respectively configured to receive individual cable channel modules, with the plurality of mount points being arranged in a predefined pattern on a frame; and a device for introducing a curable material into the respective passages of the cable channel modules.

Such a mounting device enables an accurate assembly of the flexible chain of modules and subsequently a fixing of the position of the individual modules relative to one another, such that the rigid modular assembly can be inserted e.g. into a motor car.

In a further aspect the present invention relates to a method of assembling a modular assembly of cable channel modules, the method comprising the steps of:
providing a plurality of cable channel modules, such as the ones discussed in the foregoing;
connecting the first connectors of respective cable channel modules to the second connectors of respective cable channel modules arranged adjacent to the first connectors of adjacent cable channel modules to obtain a flexible chain of cable channel modules;
arranging the flexible chain of cable channel modules, for example at a mounting device as discussed in the foregoing or alternatively within a vehicle, with the flexible chain thereby being arranged such that a predefined final shape of the modular assembly of cable channel modules is obtained; introducing a curable material into passages of the plurality of connected cable channel modules; and
curing the curable material to form the modular assembly of cable channel modules having the final shape.

The advantages described in the foregoing with reference to the individual modules and the modular assembly likewise hold true for the method described herein.

The invention will be described in the following on the basis of embodiments with reference to the Figures. There is shown:
Fig. 1 a schematic view of a first embodiment of a cable channel module;
Fig. 2 a schematic view of a second embodiment of a cable channel module;
Fig. 3 a schematic part sectional view of a further embodiment of a cable channel module;
Fig. 4 a schematic view of a modular assembly of cable channel modules;
Fig. 5 schematic views of various fixing elements;
Fig. 6 a mounting device for a modular assembly of cable channel modules;
Fig. 7 a schematic sectional view of connected cable channel modules; and
Fig. 8 views of the steps carried out to assemble a modular assembly of cable channel modules.

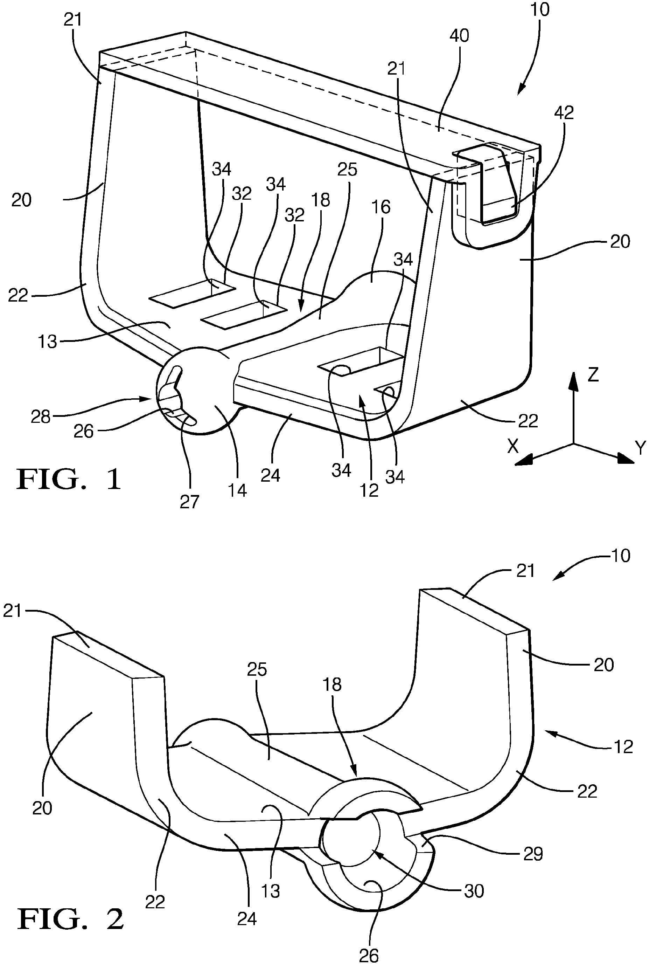

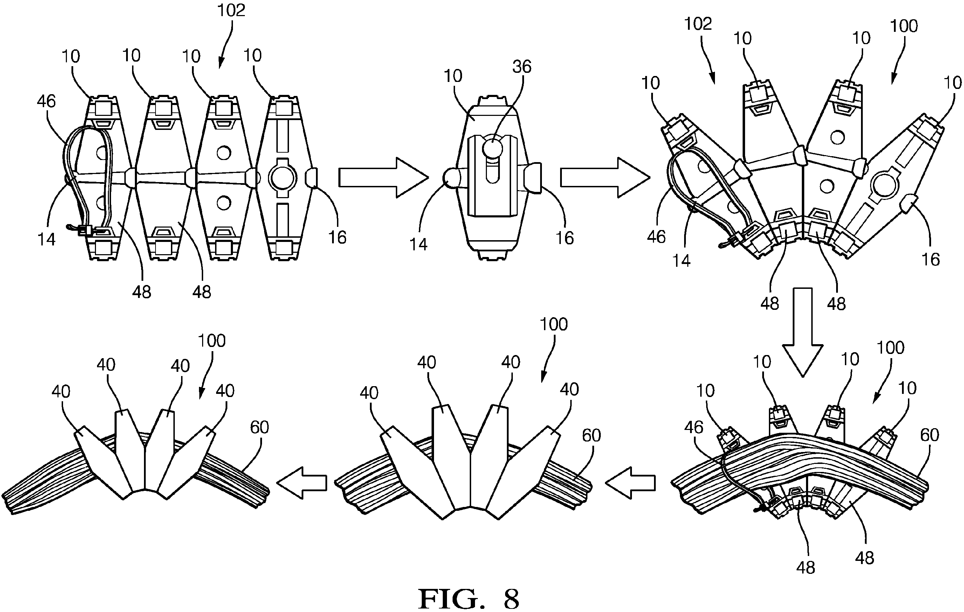

Fig. 1 shows a schematic view of a first embodiment of a cable channel module 10 for receiving at least a portion of a cable harness 60 (see Fig. 8 in this regard). The cable channel module 10 comprises a cable supporting section 12, a first connector 14 and a second connector 16 disposed opposite from one another.

The cable supporting section 12 is at least generally U-shaped such that it is open to one side. The cable harness 60 is introduced via this open side in a direction at least generally transverse to the first and second connectors 14, 16. In this connection the Cartesian coordinates X, Y and Z are indicated in Fig. 1, with the direction of introduction of the cable harness 60 transverse to the direction of the first and second connectors 14, 16 essentially corresponding to a direction lying within the Z-Y plane in the example shown. To form the open side the cable supporting section 12 has a base 18 and two side members 20 projecting from two oppositely disposed sides 22 of the base 18.

The two side members 20 are generally trapezoidal in shape. The shape of the two side members 20 is selected such that it tapers from the base 18 to a tip 21. The two side members 20 extend at least generally perpendicular from the base 18. Thereby the two side members 20 form part of an enclosure in which a cable harness 60 (see Fig. 8 in this regards) can be received. The cable supporting section 12 has a surface 13 that is configured to receive at least a part of the cable harness 60, with the surface 13 being arranged between the two side members 20.

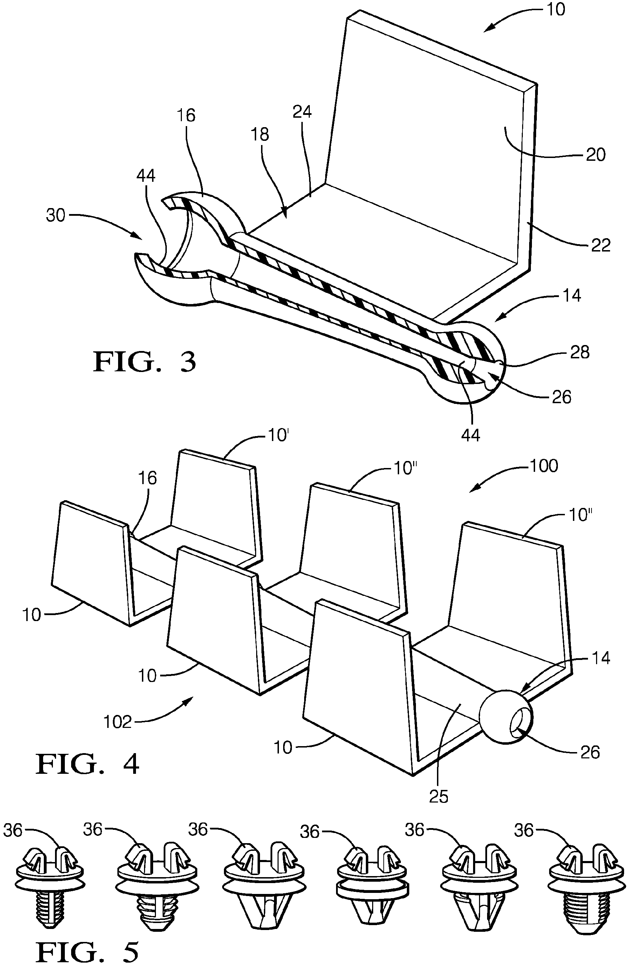

A height of each side member 20 from the base 18 to the tip 21 can be selected in the range of from 0.5 cm to 8 cm. The height of the side members 20 depends on a thickness of the cable harness 60 that is to be guided in the respective cable channel module 10. This means that applications exist in which cable channel modules 10 of varying height are assembled to form a modular assembly 100 (see e.g. Fig. 3) of cable channel modules 10.

Generally speaking a size of the base 18 is selected in the range of 1 to 8 cm by 2 to 16 cm. The selected size depends on the size of the cable harness 60 to be guided in the respective cable channel module 10. This means that applications exist in which cable channel modules 10 of varying size can be assembled to form the modular assembly 100 of cable channel modules 10.

A thickness of the base 18 and of the two side members 20 can generally be selected in the range of 1 to 10 mm depending on the application of the cable channel module 10.

The cable channel modules 10 can be made of a plastic, such as thermosetting polymers and thermoplastics, e.g. polystyrene (PS) or polyethylene (PE), preferably an ESD compliant plastic or polymer. The cable channel modules 10 can be formed in an injection molding process or in an extrusion process. Thereby a light weight and simple to manufacture cable channel module 10 can be obtained.

The first connector 14 and the second connector 16 are oppositely disposed from one another at two sides 24 of the base 18 of the cable supporting section 12. The base 18 in this way has four sides 22, 24, with the two sides 24 extending between the two sides 22 from which the two side members 20 project.

Moreover, the first and second connectors 14, 16 are respective components of an articulated link, such as male and female connectors. Articulation links such as the ones discussed in the present application are configured to allow a relative movement between two connected components about at least two axes of rotation. In the example of Fig. 1 this is a movement about the Y-axis and a movement about the Z-axis, with corresponding cable channel modules 10 being connected to one another in the X-direction.

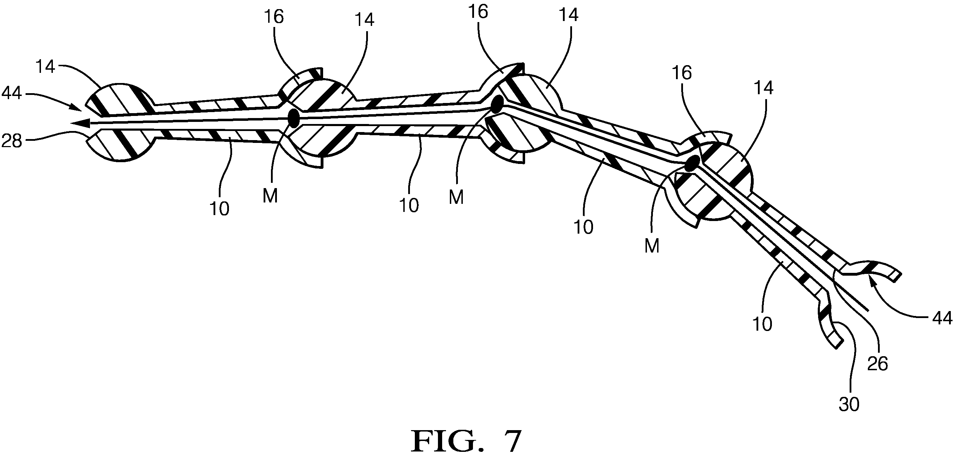

In the present instance the articulated link is configured as a ball link. For this purpose the first connector 14 is configured as a ball and the second connector 16 is configured as a socket configured to receive a ball from a further cable channel module 10 (see e.g. Fig. 7 in this regard).
A passage 26 extends through the base 18 between the two opposite sides at which the first and second connectors 14, 16 are arranged. The passage 26 is arranged generally in parallel to the two side members 20 and connects the first connector 14 to the second connector 16.

In the embodiment shown the passage 26 connects an opening 28 of the first connector 14, i.e. the ball to an opening 30 of the second connector 16, i.e. the socket. The passage 26 is configured as a drain for a curable material M (see e.g. Fig. 7), e.g. a two-component adhesive.

In the region in which the passage 26 extends through the base 18, the base comprises an elevated portion 25. This elevated portion ensures that the base 18 is not weakened in the region of the passage 26.

The opening 28 of the first connector 14 has a non-circular peripheral shape, i.e. has a non-uniform shape. To this end the opening 28 comprises three recesses 27 along its periphery.

Two further interfaces 32 are visible in the form of slots 34 in the base 18 of Fig. 1. An interface 32 could likewise be incorporated at at least one of the two side members 20 of a respective cable channel module 10.

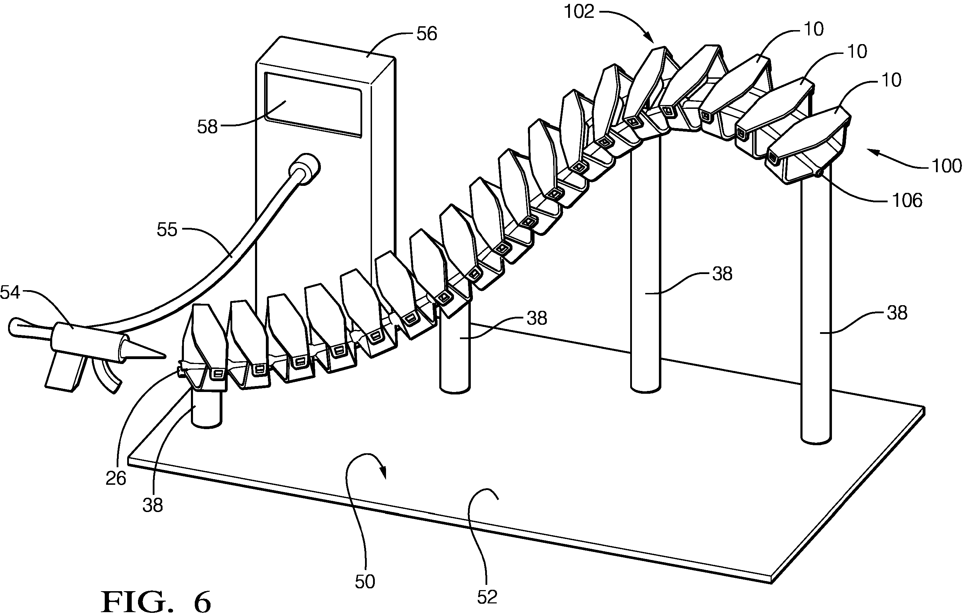

The interface 32 can be configured as an interface for a fixing element 36 (see Fig. 5 in this regard). Additionally or alternatively the interface can be an interface to a mount point 38 (see Fig. 6 in this regard). Additionally or alternatively the interface can be an interface to a fastener element 46 (see Fig. 8 in this regard) used to fasten the cable harness 60 to the cable channel module 10.

A cover 40 is connected to the respective tips 21 of the two side members 20 of the cable supporting section 12 via two connections 42. The two connections 42 permit a removal of the cover 40, so that one can access the installed cable harness 60, e.g. for the purpose of maintenance. The two connections 42 can be respective parts of a snap-on connection or can be configured in a different way.

Fig. 2 shows a schematic view of a second embodiment of a cable channel module 10. The opening 30 of the second connector 16 can be seen. Like the opening of the first connector 14 shown in Fig. 1, the opening 30 of the second connector 16 does not have a uniform outer peripheral shape, i.e. is non circular in cross-section, but rather comprises two recesses 29 therein. The shape of the periphery of the opening 28 of the first connector 14 is not complementary to a shape of the opening 30 of the second connector 16. This is such that the rigid connection between connected first and second connectors 14, 16 can be improved as adhesive present at the recesses 27 and 29 permits a bonding to the respective connector 14, 16.

Fig. 3 shows a schematic part sectional view of a further embodiment of a cable channel module 10. As can be seen from the part sectional view, the passage 26 extends from the opening 28 of the first connector to the opening 30 of the second connector 16 and thereby connects the first connector 14 to the second connector 16. A diameter of the passage 26 varies over the length of the passage. Respective reservoirs 44 are formed in the region of the openings 28, 30 of the respective first and second connectors 14, 16. The respective reservoirs 44, such as the recesses 27, 29, ensure that sufficient curable material M is present in the region of the respective opening 28, 30 of the first and second connectors 14, 16.

In this way one can ensure that the curable material M present within the opening 28 of the first connector 14 can come into contact with a surface of the second connector 16, while the curable material M present within the opening 30 of the second connector 16 can come in to contact with a surface of the first connector 14.

In this connection it should be noted that the opening 28 of the first connector 14 could have a larger surface area than the opening 30 of the second connector 16 or vice versa. By forming e.g. the opening 28 of the first connector 14 larger than the opening 30 of the second connector 16, the curable material M can at least partly cover the inner surface of the second connector 16 to increase the stability of connection between adjacent cable channel modules 10 on forming a modular assembly 100 (see Fig. 4) of cable channel modules 10.

Fig. 4 shows a modular assembly 100 of three cable channel modules 10.The first connector 14 of the first cable channel module 10' is inserted into the second connector 16 of the second cable channel module 10" and the first connector 14 of the second cable channel module 10" is inserted into the second connector 16 of the third cable channel module 10"' to form a flexible chain 102 of cable channel modules10.

Once the flexible chain 102 of cable channel modules 10 has been obtained, the first and second connectors 14, 16 of the cable channel modules 10 are fixedly connected to one another by means of a curable material M. For this purpose the curable material M is introduced into the respective passages 26 of the cable channel modules 10 via one of the first and second connectors 14, 16 of the modular assembly 100 in order to non-releasably connect first and second connectors 14, 16 of the connected cable channel modules 10.

The cable supporting section 12 is configured to receive at least a portion of a cable harness 60, so that when a modular assembly 100 of cable channel modules 10 is formed a cable harness of a vehicle (not shown) can be guided to the different respective electrical components present within a vehicle.

Fig. 5 shows a variety of fixing elements that allow the fixing of the cable channel module 10 to a chassis or other components of a vehicle (not shown). In this way the modular assembly can be connected to parts of the chassis using manufacturer specific fixing elements. This permits the cable harness of the vehicle to be guided within the modular assembly 100 in such a way that electrical components of the vehicle can be interconnected to one another, to a vehicle battery, and/or to control components of the vehicle by way of the cable harness 60.

Fig. 6 shows a mounting device 50 for a modular assembly 100 of cable channel modules 10. The mounting device 50 comprises a plurality of mount points 38 at which individual cable channel modules 10 are mounted. The mount points 38 are arranged on a frame 52 in a pre-defined pattern. This means that spacings between adjacent mounts points 38 can vary, the different mount points 38 can have a different height and the different mount points 38 can be arranged in such a manner on the frame 52 that the modular assembly attached thereto is mounted thereto such that a final shape of the desired modular assembly 100 is obtained. This final shape then corresponds to the shape of installation of the modular assembly 100 within a vehicle.

The mounting device 50 further comprises an injection device 54 for introducing a curable material M into the respective passages 26 of the cable channel modules 10. The injection device 54 is connected to a reservoir 56 of curable material M by means of a hose 55. An amount and/or a pressure of curable material M introduced into the modular assembly 100 can be monitored on a display 58 of the injection device 54.

The frame 52 shown in Fig. 6 indicates the order in which the 18 cable channel modules 10 should be connected to one another. Depending on the application up to 100 or more cable channel modules can be connected to one another to form an initially flexible chain 102 that can e.g. extend from a front end of a vehicle to the back end of the vehicle.

Fig. 7 shows a schematic sectional view of connected cable channel modules 10. The flexible chain 102 of cable channel modules has e.g. been mounted in the mounting device 50 of Fig. 6 and has thereby been arranged to form the final shape. The curable material M has been introduced into the respective passages 26 of the respective cable channel modules 10 to form a rigid modular assembly 100. In the region of the connection between adjacent cable channel modules, the curable material M accumulates to stiffen the connection between the respective first and second connectors 14, 16 in order to fix the final shape of the modular assembly 100.

Fig. 8 shows images indicative of the method steps carried out to assemble the modular assembly 100 of cable channel modules 10. In a first step shown in Fig. 8a four cable channel modules 10 are provided. The first connectors 14 of respective cable channel modules 10 have been inserted into the second connectors 16 of adjacent cable channel modules 10 to obtain the flexible chain 102 of cable channel modules 10.

A fastener element 46 in the form of a cable tie is introduced into one of the cable channel modules 10 via respective eyes 48 forming an interface 32 to the cable tie 46.

Fig. 8b shows the attachment of a fixing element 36 to the interface 32 of one of the cable channel modules 10. The fixing element 36 will subsequently be used to fix the modular assembly 100 to a vehicle.

Fig. 8c shows the step of placing the flexible chain 102 of cable channel modules 10 into the mounting device 50. The flexible chain 102 is thereby arranged such that a predefined final shape of the modular assembly 100 of cable channel modules 10 is obtained. While mounted at the mounting device 50, the curable material M is introduced into the passages 26 of the plurality of connected cable channel modules 10. The curable material M is allowed to cure to form the rigid modular assembly 100 of cable channel modules 10 having the final shape.

Fig. 8d shows the step of placing part of a cable harness 60 into the modular assembly 100. Once in situ the cable tie 46 is fastened to hold the part of the cable harness 60 in a fixed position.

Fig. 8e shows the step of applying the covers 40 to the respective cable channel modules 10. The cover 40 aids the protection of the cable harness 60 from the environment. Following the step shown in Fig. 8e, the assembled modular assembly 100 comprising the cable harness 60 is inserted and fixed to the vehicle as indicated in Fig. 8f.

It should be noted in this connection that rather than using a specific mounting device 50 having a frame 52 the flexible chain 102 can be inserted into the vehicle and the step of introducing the curable material M can be conducted while the flexible chain 102 is mounted in the vehicle. In this way the step of fastening the cable harness 60 to the modular assembly 100 and the step of placing the covers 40 onto the cable channel modules 10 is likewise conducted within the vehicle.

It should also be noted that if the modular assembly comprises two or three separate parts then parts of the separate parts can be cured outside of the vehicle and other parts can be assembled and cured within the vehicle.

### List of reference numerals:

- 10: cable channel module
- 10': first cable channel module
- 10": second cable channel module
- 10"': third cable channel module
- 12: cable supporting section
- 13: surface
- 14: first connector
- 16: second connector
- 18: base
- 20: side member
- 21: tip
- 22: side
- 24: side
- 25: elevated portion
- 26: passage
- 27: recess
- 28: opening
- 29: recess
- 30: opening
- 32: interface
- 34: slot
- 36: fixing element
- 38: mount point
- 40: cover
- 42: connection
- 44: reservoir
- 46: fastener element
- 48: eye
- 50: mounting device
- 52: frame
- 54: injection device
- 55: hose
- 56: reservoir
- 58: display
- 60: cable harness

- 100: modular assembly
- 102: chain

- M: curable material

## Claims

1. A cable channel module (10) for receiving at least a portion of a cable harness (60), the cable channel module (10) comprising
a first connector (14) and a second connector (16) oppositely disposed from one another; and
a cable supporting section (12) that has a base (18) and is open at one side for receiving said portion of the cable harness (60) in a direction transverse to the first and second connectors (14, 16);
wherein the first and second connectors (14, 16) are oppositely disposed from one another at two sides (24) of the base (18); and
wherein the first and second connectors (14, 16) are respective first and second components of an articulated link that is configured moveable about at least two axes of rotation.

2. A cable channel module (10) in accordance with claim 1,
wherein the articulated link is a ball link and the first connector (14) is a ball and the second connector (16) is a socket.

3. A cable channel module (10) in accordance with claim 1 or claim 2,
further comprising a passage (26) extending between the two sides (24) of the base (18).

4. A cable channel module (10) in accordance with claim 3,
wherein the passage (26) extends through the base (18) and connects the first connector (14) to the second connector (16).

5. A cable channel module (10) in accordance with claim 3 or claim 4,
wherein the passage (26) connects an opening (28) of the first connector (14) to an opening (30) of the second connector (16) and wherein the passage (26) is preferably configured as a drain for a curable material (M), such as e.g. a two-component adhesive.

6. A cable channel module (10) in accordance with claim 5,
wherein the opening (28) of the first connector (14) and the opening (30) of the second connector (16) have a shape whose outer periphery differs from a regular or uniform circle, preferably wherein the shape of the periphery of the opening (28) of the first connector (14) is not complementary to a shape of the opening (30) of the second connector (16).

7. A cable channel module (10) in accordance with at least one of the preceding claims 3 to 6,
wherein the base (18) comprises an elevated portion (25) in the region of the passage (26).

8. A cable channel module (10) in accordance with at least one of the preceding claims,
wherein the cable supporting section (12) has two side members (20) projecting from the base (18) at two further sides (22) of the base, with the two side members (20) forming the open side, and with the cable supporting section in particular being at least generally U-shaped, C-shaped or V-shaped.

9. A cable channel module (10) in accordance with at least one of the preceding claims,
further comprising at least one interface (32), with the at least one interface (32) being provided at at least one of the base (18) and the side members (20) of the cable supporting section (12).

10. A cable channel module (10) in accordance with claim 9,
wherein the at least one interface (32) is an interface for fixing elements (36) and/or an interface to a mount point (38) and/or an interface for a fastener element (46).

11. A cable channel module (10) in accordance with at least one of the preceding claims,
further comprising a cover (40) that can be removably connected to the two side members (20) of the cable supporting section (12).

12. A modular assembly (100) of cable channel modules (10), comprising at least first and second cable channel modules (10; 10', 10", 10"'),
wherein the first and second cable channel modules (10) are configured in accordance with at least one of the preceding claims, wherein the first connector (14) of the first cable channel module (10) is inserted into the second connector (16) of the second cable channel module (10) to form at least a part of a flexible chain (102) of cable channel modules (10).

13. A modular assembly (100) in accordance with claim 12, wherein the first connector (14) inserted into the second connector (16) of at least the first and second cable channel modules (10) is fixedly connected to the second connector (16) by means of a curable material (M), wherein preferably the curable material (M) is introduced into the respective passages (26) of the flexible chain (102) of cable channel modules (10) in order to non-releasably connect the first and second connectors (14, 16) of each of the connected first and second connectors (14, 16).

14. A mounting device (50) for a modular assembly (100) of cable channel modules (10) in accordance with claim 13, the mounting device (50) comprising:
a plurality of mount points (38) respectively configured to receive individual cable channel modules (10), with the plurality of mount points (38) being arranged in a predefined pattern on a frame (52); and
an injection device (54) for introducing a curable material (M) into the respective passages (26) of the cable channel modules (10).

15. A method of assembling a modular assembly (100) of cable channel modules (10), the method comprising the steps of:
providing a plurality of cable channel modules (10), in particular in accordance with at least one of the preceding claims 1 to 11;
connecting first connectors (14) of respective cable channel modules (10) to second connectors (16) of respective cable channel modules (10) arranged adjacent to the first connectors (14) of adjacent cable channel modules (10) to obtain a flexible chain (102) of cable channel modules (10);
arranging the flexible chain (102) of cable channel modules (10) such that a predefined final shape of the modular assembly (100) of cable channel modules (10) is obtained;
introducing a curable material (M) into passages of the plurality of connected cable channel modules (10); and
curing the curable material (M) to form the modular assembly (100) of cable channel modules (10) having the final shape.
